# EUROPÄISCHE PATENTSCHRIFT

(11) **EP 1 252 049 B1**
(45) Veröffentlichungstag und Bekanntmachung des Hinweises auf die Patenterteilung: **12.09.2007**
(21) Anmeldenummer: 01911466.9
(22) Anmeldetag: 08.01.2001
(51) Int. Cl.: B60T 7/10

(54) **SEILZUG-VORRICHTUNG ZUR BETÄTIGUNG EINES STELLGLIEDES**
CABLE CONTROL DEVICE FOR ACTIVATING A FINAL CONTROL ELEMENT
DISPOSITIF DE COMMANDE PAR CABLE PERMETTANT D'ACTIONNER UN ORGANE DE COMMANDE

(30) Priorität: 15.01.2000 DE 10001446
(43) Veröffentlichungstag der Anmeldung: 30.10.2002
(73) Patentinhaber: Volkswagen Aktiengesellschaft, 38436 Wolfsburg (DE)
(72) Erfinder: GUDLIN, Tamas, 38118 Braunschweig (DE)
(74) Vertreter: Schneider, Peter Christian
(86) Internationale Anmeldenummer: PCT/EP2001/000148
(87) Internationale Veröffentlichungsnummer: WO 2001/051325

(56) Entgegenhaltungen:
- DE-A- 4 129 934
- DE-A- 4 413 192
- DE-A- 19 742 573
- US-A- 5 251 968

## Beschreibung

Die Erfindung betrifft eine Seilzug-Vorrichtung zur Betätigung eines Stellgliedes, insbesondere zur Betätigung der Schaltwelle eines Kraftfahrzeuggetriebes, wobei vorzugsweise die Parksperre des Getriebes mit Hilfe des Seilzuges ein- bzw. ausrückbar ist, mit mindestens einer Seele und einem die Seele im wesentlichen umhüllenden Mantel, wobei ein erstes Ende des Mantels befestigt ist und der Mantel, vorzugsweise das zweite Ende des Mantels, über ein im Bereich eines Widerlagers angeordnetes Stellmittel zumindest teilweise bewegbar gelagert ist, so daß durch die Seele und den Mantel ein Zug-Druck-Kabel gebildet ist und wobei ein erstes Ende der Seele mit dem Stellglied, insbesondere der Schaltwelle wirksam verbunden ist.

Im Stand der Technik, von dem die Erfindung ausgeht (EP 0 437 509 B1), ist eine Seilzug-Vorrichtung zur Betätigung eines Stellgliedes, nämlich zur Betätigung einer Feststellbremse eines Fahrzeugs bekannt. Die Seilzug-Vorrichtung weist eine Seele und einen die Seele umhüllenden Mantel auf. Die Seele ist hier als durchgehender Drahtzug ausgebildet, wobei beide Enden der Seele mit den Enden der Betätigungshebel zweier Feststellbremsen verbunden sind. An einem Widerlager ist ein Stellmittel vorgesehen, daß so ausgebildet ist, daß zumindest ein Teilbereich des Mantels bewegbar gelagert ist. Im Endeffekt ist durch die Seele und den Mantel zumindest teilweise ein Zug-Druck-Kabel gebildet. Soll die Feststellbremse bzw. die Feststellbremsen des Kraftfahrzeuges betätigt werden, so wird der bewegbare Teil des Mantels mit Hilfe des Stellmittels derart verschoben, daß die Seele eine Zugkraft ausübt, so daß - im Endeffekt - dann die Betätigungshebel der Feststellbremsen entsprechend betätigt werden.

Weiterhin ist im Stand der Technik eine Seilzug-Vorrichtung bekannt (DE-A-197 42 573), bei der über die Seilzug-Vorrichtung das Schalt- oder Automatikgetriebe eines Kraftfahrzeuges betätigt wird. Hierfür ist die Seele des aus der Seele und dem Mantel gebildeten Zug-Druck-Kabels mit einem Handschalthebel wirksam verbunden. Der Mantel ist zumindest teilweise bewegbar angeordnet. Es ist ein Justierelement vorgesehen ist, mit dessen Hilfe eine Längenänderung des Mantels erfolgen kann, um die Seilzug-Vorrichtung entsprechend optimal justieren zu können.

Die Seilzug-Vorrichtung, von der die Erfindung ausgeht (EP 0 437 509 B1), ist nicht optimal ausgebildet. Diese bekannte Seilzug-Vorrichtung ist elektrisch betätigbar ausgebildet, weist nämlich einen Elektromotor und entsprechende Muttern bzw. Verzahnungen auf, so daß das hierdurch gebildete Stellmittel zur Bewegung des Mantels in Abhängigkeit der im Normalfall vorhandenen Elektrizität funktioniert. Problematisch ist die Funktionsfähigkeit des Stellmittels, wenn die Elektrizität des Kraftfahrzeuges ausfällt bzw. die Batterie des Kraftfahrzeuges nicht mehr funktionstüchtig ist. In diesem Fall können bspw. die einmal angezogenen und die Räder des Kraftfahrzeuges blockierenden Feststellbremsen nicht mehr ohne weiteres gelöst werden, da das Stellmittel im stromlosen Zustand nicht problemlos entriegelt werden kann. Die Praxis hat gezeigt, daß insbesondere in Wintermonaten, wo die Batterien von Kraftfahrzeugen teilweise ihre Funktionstüchtigkeit verlieren, die Feststellbremsen derartiger Kraftfahrzeuge mit diesen bekannten Seilzug-Vorrichtungen nicht immer ohne weiteres gelöst werden können. Auch ein Abschleppen des Kraftfahrzeuges ist dadurch zumindest erheblich erschwert bis sogar verhindert. Im Ergebnis ist bei der im Stand der Technik bekannten Seilzug-Vorrichtung, bei einem Ausfall des Stellmittels bzw. der Elektrizität des Kraftfahrzeuges die vollständige Funktionssicherheit der Seilzug-Vorrichtung nicht gewährleistet.

Der Erfindung liegt daher die Aufgabe zugrunde, die eingangs genannte Seilzug-Vorrichtung derart auszugestalten und weiterzubilden, daß die Funktionssicherheit erhöht ist, insbesondere bei einem Ausfall des Stellmittels aufgrund mangelnder Elektrizität das zu betätigende Stellglied zumindest entriegelbar ist.

Die zuvor aufgezeigte Aufgabe ist nun dadurch gelöst, daß eine Notbetätigung vorgesehen ist und die Notbetätigung so ausgeführt ist und mit der Seele funktionell zusammenwirkt, daß bei einem funktionellen Ausfall des Stellmittels das Stellglied mit Hilfe der Seele über die Notbetätigung betätigbar ist. Dadurch, daß nunmehr zusätzlich zum Stellmittel eine Notbetätigung vorgesehen ist, die im Handbetrieb, nämlich manuell so betätigt werden kann, daß bei einem funktionellen Ausfall des Stellmittels das Stellglied, insbesondere die Schaltwelle oder auch Feststellbremse betätigbar ist, werden die eingangs beschriebenen Nachteile vermieden. Auch bei einem Ausfall der Elektrizität des Kraftfahrzeuges kann nunmehr die Feststellbremse entriegelt werden bzw. die im Getriebe eingelegte Parkbremse über die Seilzug-Vorrichtung herausgenommen werden. Die Funktionstüchtigkeit bzw. Funktionssicherheit der Seilzug-Vorrichtung ist dadurch wesentlich erhöht.

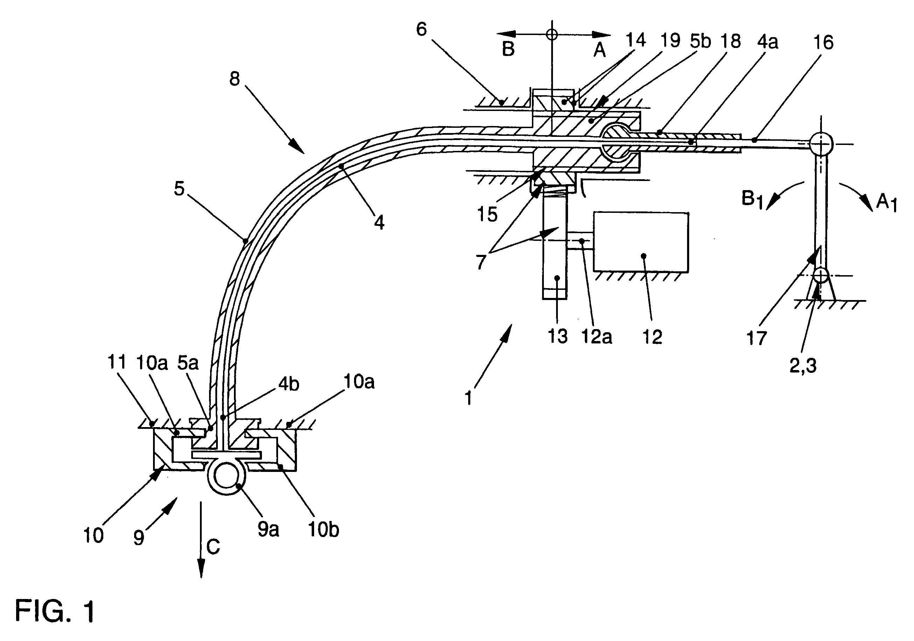

Es gibt nun eine Vielzahl von Möglichkeiten die erfindungsgemäße Seilzug-Vorrichtung in vorteilhafter Weise auszugestalten und weiterzubilden. Hierfür darf zunächst auf die dem Patentanspruch 1 nachgeordneten Patentansprüche verwiesen werden. Im Folgenden soll nun eine bevorzugte Ausführungsform der Erfindung anhand einer Zeichnung und der nachfolgenden Beschreibung näher erläutert werden. Die Zeichnung zeigt
- Fig. 1: in einer vereinfachten schematischen Darstellung die erfindungsgemäße Seilzug-Vorrichtung von der Seite.

Die einzige Figur der Zeichnung, nämlich die Fig. 1 zeigt eine Seilzug-Vorrichtung 1 zur Betätigung eines Stellgliedes 2. Die hier dargestellte bevorzugte Ausführungsform der Seilzug-Vorrichtung 1 dient zur Betätigung der Schaltwelle 3 eines nicht näher dargestellten Kraftfahrzeuggetriebes. Mit Hilfe der Seilzug-Vorrichtung 1 wird die Parksperre des Getriebes ein- bzw. ausgerückt. Hierzu weist die Seilzug-Vorrichtung 1 mindestens eine Seele 4 und einen die Seele 4 im wesentlichen umhüllenden Mantel 5 auf. Ein erstes Ende 5a des Mantels 5 ist befestigt und der Mantel 5, nämlich das zweite Ende 5b des Mantels 5, ist über ein im Bereich eines Widerlagers 6 angeordnetes Stellmittel 7 zumindest teilweise bewegbar gelagert, so daß durch die Seele 4 und den Mantel 5 ein Zug-Druck-Kabel 8 gebildet ist. Weiterhin ist ein erstes Ende 4a der Seele 4 mit dem Stellglied 2, nämlich hier der Schaltwelle 3 wirksam verbunden.

Die eingangs beschriebenen Nachteile sind nun dadurch vermieden, daß eine Notbetätigung 9 vorgesehen ist und die Notbetätigung 9 so ausgeführt ist und mit der Seele 4 funktional zusammenwirkt, daß bei einem funktionellen Ausfall des Stellmittels 7 das Stellglied 2 mit Hilfe der Seele 4 über die Notbetätigung 9 betätigbar ist. Auch bei einem Ausfall der Elektrizität des Kraftfahrzeuges bzw. bei einem Ausfall der Batterie kann im hier dargestellten Fall die Schaltwelle 3 des Getriebes des Kraftfahrzeuges entsprechend mit Hilfe der Seilzug-Vorrichtung 1, nämlich der Notbetätigung 9 betätigt werden, so daß eine bereits im Getriebe, vorzugsweise in einem Automatikgetriebe eingelegte Parksperre auch wieder ausgerückt werden kann und das Fahrzeug abschleppbar ist. Anders ausgedrückt, die Funktionsfähigkeit bzw. die Sicherheit der Seilzug-Vorrichtung 1 ist dadurch erhöht, daß mit Hilfe der zusätzlich vorgesehenen, vzw. manuellen Notbetätigung 9 das Stellglied 2, hier die Schaltwelle 3 des Getriebes betätigt werden kann, auch wenn daß für die Betätigung eigentlich vorgesehene Stellmittel 7 ausgefallen ist. Dies wird im einzelnen noch näher erläutert werden.

Aus Fig. 1 ist gut zu erkennen, die Seilzug-Vorrichtung 1 zur Betätigung der Schaltwelle 3 eines nicht dargestellten Kraftfahrzeuggetriebes. Mit Hilfe der Seilzug-Vorrichtung 1 läßt sich die Parksperre des Getriebes einlegen bzw. ausrücken. Bei Ausfall des Stellmittels 7, was im folgenden noch näher erläutert werden wird, ist eine Notbetätigung 9 vorgesehen, die ein laschenartiges Entriegelungselement 9a aufweist. Das zweite Ende 4b der Seele 4 ist wirksam mit dem Entriegelungselement 9a verbunden. Gut zu erkennen ist, daß das laschenartige Entriegelungselement 9a eine hier nicht näher bezeichnete Durchgriffsöffnung für einen menschlichen Finger aufweist, die auf einer nicht näher bezeichneten Grundplatte bzw. auf einem Basissteg angeordnet ist, der mit dem zweiten Ende 4b der Seele 4 die vzw. als Drahtzug ausgeführt ist, wirksam verbunden ist. Das Entriegelungselement 9a ist mit Hilfe eines Verschlußelementes 10 gesichert. Das Verschlußelement 10 weist erste und zweite Schenkel 10a bzw. 10b auf. Die ersten Schenkel 10a stehen mit dem ersten Ende 5a des Mantels 5 in Eingriff, wobei die zweiten Schenkel 10b den Außenbereich der Grund- bzw. Basisplatte des Entriegelungselementes 9a umgreifen. Die hier dargestellte Notbetätigung 9 ist vzw. an einer Konsole 11 im Innenraum des Fahrzeuges vorgesehen, so daß der Fahrer die Notbetätigung 9 leicht betätigen kann, wenn das Stellmittel 7 ausfällt.

Es ist hier gut zu erkennen, daß die Notbetätigung 9 im Bereich der Konsole 11 angeordnet ist, nämlich das erste Ende 5a des Mantels 5 eine umlaufende Nut aufweist, in die die ersten Schenkel 10a des Verschlußelementes10 eingreifen, so daß das erste Ende 5a des Mantels 5 ebenfalls im Bereich der Konsole 11 fixiert ist. Weiterhin ist das Verschlußelement 10 so ausgeführt, daß das Entriegelungselement 9a aus dem Verschlußelement 10 herausziehbar ist. Hierfür können die zweiten Schenkel 10b des Verschlußelementes 10 elastisch ausgeführt, so daß eine entsprechende Bewegung des Entriegelungselementes 9a ermöglicht ist. Hier sind die Schenkel 10b jedoch mit dem Entriegelungselement 9a lösbar verbunden, bspw. über entsprechende Schraubverbindungen, wobei die Schenkel 10b demontierbar sind. Folglich werden die Schenkel 10b demontiert bevor das Entriegelungselement 9a betätigt wird bzw. können später wieder angebracht werden.

Wie Fig. 1 weiterhin gut zeigt, weist das Stellmittel 7 einen Elektromotor 12 mit einer Motorwelle 12a, eine Zahnradstufe 13 und eine Betätigungsmutter 14 auf. Bei entsprechender Betätigung des Elektromotors 12 bzw. der Motorwelle 12a wird über die Zahnradstufe 13 die Betätigungsmutter 14 angesteuert bzw. angetrieben. Die Betätigungsmutter 14 ist allerdings innerhalb des Widerlagers 6, daß in einem bestimmten Abstand zum Getriebe - je nach Platzbedarf - vorgesehen ist, gelagert bzw. angeordnet. Die Betätigungsmutter 14 steht mit einem ein Außengewinde aufweisenden Bereich 15 des Mantels 5 in Eingriff. Mit Hilfe des derartig ausgeführten Stellmittels 7 ist eine Verschiebung des zweiten Endes 5b des Mantels 5 und damit teilweise des Mantels 5 selbst ermöglicht. Hierbei ist zwischen dem Bereich 15 bzw. dem zweiten Ende 5b des Mantels 5 und dem Widerlager 6 eine Verdrehsicherung 19, bspw. eine axiale Führung durch Nut und Feder vorgesehen.

Fig. 1 zeigt, daß das erste Ende 4a der Seele 4 über eine Betätigungsstange 16 mit dem Betätigungshebel 17 der Schaltwelle 3 wirksam verbunden ist. So kann über das Entriegelungselement 9a, das wirksam mit dem zweiten Ende 4b der Seele 4 verbunden ist und über die Seele 4 die Betätigungsstange 16 betätigt bzw. der Betätigungshebel 17 so verschwenkt werden, daß die Schaltwelle 3 entsprechend bewegt wird, um die Parksperre im Getriebe einzurücken bzw. auszurücken. Damit bei einer Verschwenkung des Betätigungshebels 17 durch die Betätigungsstange 16 noch eine gute Führung gewährleistet ist, ist die Betätigungsstange 16 zumindest teilweise mit einem kugelgelagerten Betätigungsarm 18 in Eingriff stehend. Das kugelkopfförmige Ende des Betätigungsarmes 18 ist gelenkig am zweiten Ende 5a des Mantels 5 gelagert.

Im Betrieb der Seilzug-Vorrichtung 1 ist der Elektromotor 12 in allen Fahrstufen eines Automatikgetrieben, also bei Rückwärts R, bei Neutral N, Vorwärtsfahrt D bzw. den Fahrstufen 1, 2 oder 3 stromlos geschaltet. Erst wenn die Parksperre P im Getriebe eingelegt werden soll, wird der Elektromotor 12 bestromt. Für diesen Fall wird dann die Zahnradstufe 13 bzw. die Betätigungsmutter 14 so angetrieben, daß der Bereich 15 des Mantels 5 gemäß dem Pfeil A nach rechts verschoben wird. Hierauf schwenkt der Betätigungshebel 17 ebenfalls nach rechts gemäß dem Pfeil A₁, die Schaltwelle 3 erfährt die entsprechende Drehbewegung und die Parksperre P wird im Getriebe eingelegt. Für diesen Fall wird also die Seele 4 bzw. der Mantel 5 auf "Druck" beansprucht. Im entgegengesetzten Fall also wenn die Parksperre wieder ausgerückt werden soll, wird - im Normalbetrieb - über den Elektromotor 12 die Zahnradstufe 13 sowie die Betätigungsmutter 14 so angesteuert, daß der Bereich 15 des Mantels 5 nach links gemäß dem Pfeil B verschoben wird. Hieraufhin wird der Betätigungshebel 17 gemäß dem Pfeil B₁ nach links verschwenkt, wobei die Seele 4 bzw. der Mantel 5 auf "Zug" beansprucht wird.

Bei einer Notentriegelung, also dem Ausrücken der Parksperre P im Getriebe, dann wenn das Stellmittel 7 ausfällt bzw. die Elektrizität des Kraftfahrzeuges ausfällt, kann über das Entriegelungselement 9a die Parksperre P ausgerückt werden. Zieht der Fahrer nämlich am Entriegelungselement 9a so wird die Seele 4 auf Zug beansprucht und der Betätigungshebel 17 wird nach links gemäß dem Pfeil B₁ verschwenkt. Hierbei können dann die zweiten Schenkel 10b des Verschlußelementes 10 nach außen knicken, wenn diese elastisch ausgeführt sind, um eine Bewegung des Entriegelungselementes 9a gemäß dem Pfeil C zu ermöglichen. Hier jedoch werden die Schenkel 10b, die nicht als integrale Bestandteile des Verschlußelementes 10 ausgeführt sind demontiert.

Vzw. wird die hier dargestellte Seilzug-Vorrichtung 1 für die Betätigung einer Parksperre von automatischen Getrieben bei Kraftfahrzeugen eingesetzt. Denkbar ist auch, daß diese Seilzug-Vorrichtung 1 für die Bremsbetätigung bei Feststellbremsen verwendet wird. Es ist auch denkbar, daß das Entriegelungselement 9a nicht mit der Hand bedient wird, sondern so angeordnet bzw. ausgebildet ist, daß dies auch mit dem Fuß des Fahrers betätigt werden kann.

Die Betätigungsmutter 14 ist innerhalb des Widerlagers 6 gelagert und steht mit dem Außengewinde des Bereiches 15 des Mantels 5 in Eingriff. Der Bereich 15 des Mantels 5 ist hier im wesentlichen axial geführt, wobei vzw. eine Verdrehsicherung 19 vorgesehen ist. Mindestens ein Ende des Mantels 5 ist in beide Richtungen axial fixiert, in diesem Fall ist daß das erste Ende 5a des Mantels 5, wie aus Fig. 1 ersichtlich.

Beim Einlegen der Parksperre P wird der E-Motor 12 - im Normalbetrieb - bestromt und treibt die Betätigungsmutter 14 an, so daß der Betätigungshebel 17 in Stellung zum Einlegen der Parksperre P verdreht wird (gemäß dem Pfeil A₁). Im Endeffekt wird durch die Verschiebung des Mantels 5 eine Druck- bzw. Zugbelastung auf die Seele 4 hervorgerufen, wodurch der Betätigungshebel 17 entsprechend verdreht wird.

Wird das Fahrzeug bei eingelegter Parksperre P abgestellt und ist kein Strom vorhanden (Batterie leer) wäre eine Notentriegelung über die Notbetätigung 9 bzw. über das Entriegelungselement 9a möglich, so daß nach Ausrücken der Parksperre P das Fahrzeug entsprechend abgeschleppt werden könnte.

Es ist auch denkbar, daß die Seilzug-Vorrichtung 1 zum Einlegen der Parksperre im Getriebe genau entgegengesetzt funktioniert wie in Fig. 1 dargestellt, nämlich die Seele 4 beim Einlegen der Parksperre P auf Zug und beim Auslegen der Parksperre P auf Druck belastet wird. In diesem Fall müßte dann bei der Notbetätigung 9 die Seele 4 nicht herausgezogen, sondern hineingedrückt werden, was vzw. durch eine Fußbetätigung vom Fahrersitz aus erfolgen könnte.

Bspw. könnte auch die Betätigungsmutter 14, als Verstelleinheit in einem anderen Bereich des Mantels 5 oder entsprechend zwischen dem ersten und zweiten Ende 5a bzw. 5b des Mantels 5 angeordnet werden. Im letzteren Fall könnte der Mantel 5 dann zweiteilig ausgeführt werden.

Vzw. ist das mit der Betätigungsmutter 14 in Eingriff stehende Gewinde des Bereiches 15 als selbstsperrendes Gewinde ausgeführt. Insbesondere bei einem Stellmittel 7, bzw. einer Verstelleinheit, mit einem zweiteilig ausgeführten Mantel 5, könnte die Betätigungsmutter 14 mit einem rechts-links Gewinde versehen werden, also das Stellmittel 7 zwei auseinanderschiebbare Bestandteile aufweist.

Zur Betätigung der Betätigungsmutter 14 können verschiedene Übersetzungsarten bzw. Übersetzungsvorrichtungen dienen, bspw. Stirnradgetriebe, Schneckengetriebe, Kegelradgetriebe, Kettengetriebe oder auch Riemengetriebe.

Wie die Fig. 1 zeigt ist das Entriegelungselement 9a durch das Verschlußelement 10 blockiert, nämlich hier auf mechanische Art und Weise blockiert. Es ist auch denkbar, daß die Blockierung elektrisch erfolgt bzw. eine mechanische und/oder elektrische Anordnung zur Blockierung des Entriegelungselementes 9a über ein entsprechendes Verschlußelement 10 möglich ist. Bspw. könnte bei einer elektrischen Blockierung der Notbetätigung diese Notbetätigung 9 blockiert sein, wenn die Zündung eingeschaltet ist bzw. freigeschaltet werden, wenn die Zündung ausgeschaltet ist.

Zwar ist in Fig. 1 die Anbindung der Seilzug-Vorrichtung 1, insbesondere der Seele 4 über eine Betätigungsstange 16 und ein Betätigungshebel 17 auf das Stellglied 2, nämlich die Schaltwelle 3 realisiert, es sind aber auch andere Anbindungen, insbesondere direkte Anbindungen ohne die entsprechenden Hebel denkbar.

### BEZUGSZEICHENLISTE

- 1: Seilzug-Vorrichtung
- 2: Stellglied
- 3: Schaltwelle
- 4: Seele
- 4a: erstes Ende
- 4b: zweites Ende
- 5: Mantel
- 5a: erstes Ende
- 5b: zweites Ende
- 6: Widerlager
- 7: Stellmittel
- 8: Zug-Druck-Kabel
- 9: Notbetätigung
- 9a: Entriegelungselement
- 10: Verschlußelement
- 10a: erster Schenkel
- 10b: zweiter Schenkel
- 11: Konsole
- 12: E-Motor
- 12a: Motorwelle
- 13: Zahnradstufe
- 14: Betätigungsmutter
- 15: Bereich
- 16: Betätigungsstange
- 17: Betätigungshebel
- 18: Betätigungsarm
- 19: Verdrehsicherung

- Pfeil A₁: Pfeil B
- Pfeil A: Pfeil C
- Pfeil B₁:

## Patentansprüche

1. Seitzug-Vorrichtung (1) zur Betätigung eines Stellgliedes (2), insbesondere zur Betätigung einer Schaltwelle (3) eines Kraftfahrzeuggetriebes, wobei vorzugsweise die Parksperre P des Getriebes mit Hilfe der Vorrichtung ein- bzw. ausrückbar ist, mit mindestens einer Seele (4) und einem die Seele (4) im wesentlichen umhüllenden Mantel (5), wobei ein erstes Ende (5a) des Mantels (5) befestigt ist und (5) das zweite Ende (5b) des Mantels(5) über ein im Bereich eines Widerlagers (6) angeordnetes Stellmittel (7) zumindest teilweise bewegbar gelagert ist, so daß durch die Seele (4) und den Mantel (5) ein Zug-Druck-Kabel (8) gebildet ist und wobei ein erstes Ende (4a) der Seele (4) mit dem Stellglied (2), insbesondere der Schaltwelle (3) wirksam verbunden ist, **dadurch gekennzeichnet, daß** eine Notbetätigung (9) vorgesehen ist und die Notbetätigung (9) so ausgeführt ist und mit der Seele (4) funktionell zusammenwirkt, daß bei einem funktionellen Ausfall des Stellmittels (7) das Stellglied (2) mit Hilfe der Seele (4) über die Notbetätigung (9) betätigbar ist.

2. Vorrichtung nach Anspruch 1, **dadurch gekennzeichnet, daß** die Notbetätigung (9) ein laschenartiges Entriegelungselement (9a) aufweist, das mit dem zweiten Ende (4b) der Seele (4) wirksam verbunden ist.

3. Vorrichtung nach Anspruch 1 oder 2, **dadurch gekennzeichnet, daß** das Entriegelungselement (9a) mit Hilfe eines Verschlußelementes (10) gesichert ist.

4. Vorrichtung nach einem der vorstehenden Ansprüche, **dadurch gekennzeichnet, daß** das Verschlußelement (10) erste und zweite Schenkel (10a, 10b) aufweist, die ersten Schenkel (10a) mit dem ersten Ende des Mantels (5) in Eingriff stehen und die zweiten Schenkel (10b) den Außenbereich des Entriegelungselementes (9a) umgreifen.

5. Vorrichtung nach einem der vorstehenden Ansprüche, **dadurch gekennzeichnet, daß** die Notbetätigung (9) an einer Konsole (11) im Innenraum des Fahrzeuges vorgesehen ist.

6. Vorrichtung nach einem der vorstehenden Ansprüche, **dadurch gekennzeichnet, daß** das Stellmittel (7) einen Elektromotor (12), eine Zahnradstufe (13) und eine Betätigungsmutter (14) aufweist.

7. Vorrichtung nach einem der vorstehenden Ansprüche, **dadurch gekennzeichnet, daß** die Betätigungsmutter (14) innerhalb eines Widerlagers (6) angeordnet bzw. gelagert ist und mit einem ein Außengewinde aufweisenden Bereich (15) des Mantels (5) in Eingriff steht.

8. Vorrichtung nach einem der vorstehenden Ansprüche, **dadurch gekennzeichnet, daß** mit Hilfe des Stellmittels (7) eine Verschiebung des zweiten Endes (5b) des Mantels (5) ermöglicht ist.

9. Vorrichtung nach einem der vorstehenden Ansprüche, **dadurch gekennzeichnet, daß** das erste Ende (4a) der Seele (4) über eine Betätigungsstange (16) mit dem Betätigungshebel (17) der Schaltwelle (3) wirksam verbunden ist.

10. Vorrichtung nach einem der vorstehenden Ansprüche, **dadurch gekennzeichnet, daß** die Betätigungsstange (16) zumindest teilweise mit einem kugelgelagertem Betätigungsarm (18) in Eingriff steht.

11. Vorrichtung nach einem der vorstehenden Ansprüche, **dadurch gekennzeichnet, daß** der Elektromotor (12) in allen Fahrstufen mit Ausnahme einer Parksperre P stromlos geschaltet ist.

## Claims

1. Cable-pull device (1) for actuating an actuator (2), in particular for actuating a selector shaft (3) of a motor vehicle transmission, preferably the parking lock P of the transmission being engageable and disengageable with the aid of the device, with at least one core (4) and with a sheath (5) essentially encasing the core (4), a first end (5a) of the sheath (5) being fastened, and the second end (5b) of the sheath (5) being mounted as to be at least partially moveable via an actuating means (7) arranged in the region of an abutment (6), so that the core (4) and the sheath (5) form a pull/push cable (8), and a first end (4a) of the core (4) being operatively connected to the actuator (2), in particular the selector shaft (3), **characterized in that** emergency actuation (9) is provided, and the emergency actuation (9) is designed and cooperates functionally with the core (4) in such a way that, in the event of a functional failure of the actuating means (7), the actuator (2) can be actuated with the aid of the core (4) via the emergency actuation (9).

2. Device according to Claim 1, **characterized in that** the emergency actuation (9) has a shackle-like release element (9a) which is operatively connected to the second end (4b) of the core (4).

3. Device according to Claim 1 or 2, **characterized in that** the release element (9a) is secured with the aid of a fastening element (10).

4. Device according to one of the preceding claims, **characterized in that** the fastening element (10) has first and second limbs (10a, 10b), the first limbs (10a) are in engagement with the first end of the sheath (5) and the second limbs (10b) surround the outer region of the release element (9a).

5. Device according to one of the preceding claims, **characterized in that** the emergency actuation (9) is provided on a bracket (11) in the interior of the vehicle.

6. Device according to one of the preceding claims, **characterized in that** the actuating means (7) has an electric motor (12), a gearwheel stage (13) and an actuating nut (14).

7. Device according to one of the preceding claims, **characterized in that** the actuating nut (14) is arranged or mounted within an abutment (6) and is in engagement with a region (15) of the sheath (5), said region having an external thread.

8. Device according to one of the preceding claims, **characterized in that**, with the aid of the actuating means (7), a displacement of the second end (5b) of the sheath (5) becomes possible.

9. Device according to one of the preceding claims, **characterized in that** the first end (4a) of the core (4) is operatively connected to the actuating lever (17) of the selector shaft (3) via an actuating rod (16).

10. Device according to one of the preceding claims, **characterized in that** the actuating rod (16) is in engagement at least partially with a ball-mounted actuating arm (18).

11. Device according to one of the preceding claims, **characterized in that** the electric motor (12) is switched to currentless in all the driving stages, with the exception of a parking lock P.

## Revendications

1. Dispositif (1) de commande par câble permettant d'actionner un organe de commande (2), notamment d'actionner un arbre (3) de changement de vitesse d'une boîte de vitesses de véhicule automobile, sachant de préférence que le verrouillage de parking P de la boîte de vitesses peut être engagé et désengagé à l'aide du dispositif, comportant au moins une âme (4) et une gaine (5) enveloppant pour l'essentiel l'âme (4), sachant qu'une première extrémité (5a) de la gaine (5) est fixée et que la deuxième extrémité (5b) de la gaine (5) est montée au moins partiellement à déplacement par le biais d'un moyen de commande (7) disposé dans la région d'un contre-appui (6), de sorte que l'âme (4) et la gaine (5) forment un câble de traction-compression (8), et sachant qu'une première extrémité (4a) de l'âme (4) est fonctionnellement reliée à l'organe de commande (2), notamment à l'arbre (3) de changement de vitesse, **caractérisé en ce qu'**il est prévu un actionnement de secours (9) et que l'actionnement de secours (9) est réalisé de telle sorte et coopère fonctionnellement avec l'âme (4) de telle sorte qu'en cas de défaillance fonctionnelle du moyen de commande (7), l'organe de commande (2) peut être actionné à l'aide de l'âme (4) par le biais de l'actionnement de secours (9).

2. Dispositif selon la revendication 1, **caractérisé en ce que** l'actionnement de secours (9) présente un élément de déverrouillage (9a) du genre patte, qui est fonctionnellement relié à la deuxième extrémité (4b) de l'âme (4).

3. Dispositif selon la revendication 1 ou 2, **caractérisé en ce que** l'élément de déverrouillage (9a) est bloqué à l'aide d'un élément de fermeture (10).

4. Dispositif selon l'une quelconque des revendications précédentes, **caractérisé en ce que** l'élément de fermeture (10) présente des premières et deuxièmes branches (10a, 10b), les premières branches (10a) étant en prise avec la première extrémité de la gaine (5) et les deuxièmes branches (10b) s'engageant autour de la région extérieure de l'élément de déverrouillage (9a).

5. Dispositif selon l'une quelconque des revendications précédentes, **caractérisé en ce que** l'actionnement de secours (9) est prévu sur une console (11) dans l'habitacle du véhicule.

6. Dispositif selon l'une quelconque des revendications précédentes, **caractérisé en ce que** le moyen de commande (7) présente un moteur électrique (12), un étage à roue dentée (13) et un écrou d'actionnement (14).

7. Dispositif selon l'une quelconque des revendications précédentes, **caractérisé en ce que** l'écrou d'actionnement (14) est disposé ou encore monté à l'intérieur d'un contre-appui (6) et engrène avec une région (15) de la gaine (5) qui présente un filetage extérieur.

8. Dispositif selon l'une quelconque des revendications précédentes, **caractérisé en ce qu'**à l'aide du moyen de commande (7), on peut déplacer la deuxième extrémité (5b) de la gaine (5).

9. Dispositif selon l'une quelconque des revendications précédentes, **caractérisé en ce que** la première extrémité (4a) de l'âme (4) est fonctionnellement reliée au levier d'actionnement (17) de l'arbre (3) de changement de vitesse par l'intermédiaire d'une tige d'actionnement (16).

10. Dispositif selon l'une quelconque des revendications précédentes, **caractérisé en ce que** la tige d'actionnement (16) est au moins partiellement en prise avec un bras d'actionnement (18) monté sur roulement à billes.

11. Dispositif selon l'une quelconque des revendications précédentes, **caractérisé en ce que** le moteur électrique (12) est commuté hors tension dans toutes les positions de marche à l'exception d'un verrouillage de parking P.
